# EUROPÄISCHE PATENTSCHRIFT

(11) **EP 1 028 192 B1**
(45) Veröffentlichungstag und Bekanntmachung des Hinweises auf die Patenterteilung: **23.06.2004**
(21) Anmeldenummer: 99124605.9
(22) Anmeldetag: 10.12.1999
(51) Int. Cl.: D21F 1/70

(54) **Verfahren zur Entfernung von Feststoffen aus einer wässrigen Papierfasersuspension**
Process for removing solids from an aqueous pulp suspension
Procédé pour enlever les matières solides d'une suspension de pâte à papier aqueuse

(30) Priorität: 10.02.1999 DE 19905439
(43) Veröffentlichungstag der Anmeldung: 16.08.2000
(73) Patentinhaber: Voith Paper Patent GmbH, 89522 Heidenheim (DE)
(72) Erfinder: Gommel, Axel, 88214 Ravensburg (DE); Kemper, Martin, 88250 Weingarten (DE); Kriebel, Almut, 88250 Weingarten (DE)

(56) Entgegenhaltungen:
- EP-A- 0 798 416
- US-A- 4 913 805
- US-A- 5 804 061

## Beschreibung

Die Erfindung betrifft ein Verfahren zur Entfernung von Feststoffen aus einer wässrigen Papierfasersuspension gemäß dem Oberbegriff des Anspruchs 1.

Verfahren der genannten Art werden verwendet, um aus einer faserstoffhaltigen Suspension zumindest einen Teil der darin suspendierten Feststoffteilchen auszuscheiden. Bekanntlich wird bei einer Flotation ein die auszuscheidenden Stoffe enthaltender Schaum oder Schwimmschlamm gebildet. Ein typischer Anwendungsfall eines derartigen Verfahrens ist die Aufbereitung von einer aus bedrucktem Altpapier gewonnenen wässrigen Papierfasersuspension, in der die Druckfarbenpartikel bereits von Fasern abgelöst sind, so daß sie sich ausflotieren lassen. Der hier beschriebene Flotationsvorgang nutzt die Unterschiede zwischen Faserstoff und unerwünschten Feststoffteilchen in der Art, daß der Faserstoff aufgrund seiner Hydrophilie in der Faserstoffsuspension verbleibt, während die auszuscheidenden Feststoffteilchen hydrophob sind und deshalb zusammen mit den Luftblasen in den Schaum gelangen. Neben den Druckfarbenpartikeln gibt es auch eine Vielzahl weiterer Stoffe, die hydrophob sind und sich daher durch Flotation von dem Faserstoff trennen lassen. Solche Stoffe sind insbesondere Kleber, feine Kunststoffpartikel und eventuell auch Harze. Wenn durch das Flotationsverfahren Fasern von Verunreinigungen getrennt, also nicht alle Feststoffpartikel aussortiert werden sollen, spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Faserstoffsuspensionen verwendet.

Der Stand der Technik bezüglich Flotationsverfahren für Faserstoffsuspensionen ist bereits sehr weit fortgeschritten. Daher gibt es Lösungen, welche durchaus geeignet sind, einen großen Teil der Feststoffpartikel durch Flotation zu entfernen. Ein wichtiger Aspekt bei Verfahren dieser Art liegt aber auch darin, welche Zusammensetzung und Beschaffenheit beim Flotationsschaum erreicht werden. Es ist nämlich anzustreben, diesen in möglichst eingedickter Form aus der Flotationsanlage abzuführen, wobei er aber möglichst vollständig die ausflotierten Störstoffe und in möglichst geringem Maße Papierfasern enthalten soll. In der Regel wird der Flotationsschaum oberhalb der an der Flotation beteiligten Suspension angesammelt und, z.B. seitlich über ein Schaumwehr oder senkrecht nach oben, über eine Absaugvorrichtung abgeleitet. Dabei findet eine Eindickung, d.h. Entwässerung des Flotationsschaumes statt.

Aus der US 5,804,061 ist ein Verfahren zum Entfernen von Feststoffen aus einer wässrigen Papierfasersuspension bekannt, bei dem ein Teil des gebildeten Flotationsschaumes schräg nach oben abgeführt und in den Zulauf zur Flotationsanlage zurückgeführt wird. Auf diese Weise gelangt ein Teilstrom des Schaumes vollständig in den Flotationsprozess zurück, während ein anderer Teilstrom die Störstoffe abscheidet. Um die Trennung von verschmutztem Schaum und gereinigter Suspension zu unterstützen, sind im Schaumableitungsbereich entsprechend geformte Führungsbleche angebracht.

Der Erfindung liegt die Aufgabe zugrunde, ein Flotationsverfahren zur wirksamen Entfernung von bestimmten Feststoffen aus der Faserstoffsuspension zu schaffen und dabei den gebildeten Flotationsschaum weiter einzudicken, ohne den Aufwand wesentlich zu erhöhen.

Diese Aufgabe wird durch die kennzeichnenden Merkmale des Anspruchs 1 in vollem Umfang gelöst.

Dadurch, daß erfindungsgemäß der Flotationsschaum in einer speziellen Entwässerungsstrecke seitlich oder schräg nach oben abgeführt wird, legt er einen relativ langen Weg zurück, auf dem sich ein Teil der darin enthaltenen Flüssigkeit sammeln und abfließen kann. Dadurch wird der Schaum auf einfache Weise eingedickt, was schon deshalb von Vorteil ist, weil das Abpressen von Wasser aus dem schmierigen Flotationsschaum sonst sehr aufwendig ist. Die Flüssigkeit, im allgemeinen verschmutztes Wasser, tritt nach einer kurzen Sinkstrecke bereits aus dem Schaum heraus und gelangt z.B. an eine an die Entwässerungsstrecke unten abschließende Wandung, an der es dann ablaufen kann. Dadurch wird auch das unerwünschte Zurückdrücken oder Anstauen des nachfolgenden Flotationsschaumes wirksam verhindert. Ein weiterer wichtiger Vorteil der Erfindung liegt darin, daß es leicht möglich ist, im Bedarfsfall die abgeschiedene Flüssigkeit aus dem Flotationsbehälter abzuführen. Diese Flüssigkeit ist in der Regel stärker mit störenden Feststoffen belastet als die Suspension selbst.

Es bestehen mehrere Möglichkeiten, diese abfließende Flüssigkeit zu behandeln: Erstens kann sie aus dem Flotationsbehälter abgeleitet und einer speziellen Reinigung oder sonstigen Wiederverwendung zugeführt werden oder zweitens, man läßt es direkt in die Suspension zurückfließen, in der die Flotation durchgeführt wird. Dabei wäre es allerdings von Vorteil, wenn die Papierfasersuspension im Flotationsbehälter nicht so stark verwirbelt wird, daß die abfließende Flüssigkeit in den Auslauf für die gereinigte Faserstoffsuspension, also den Gutstoff, gelangen könnte. Eine weitere Möglichkeit besteht darin, die Flüssigkeit mit der in den Flotationsbehälter einfließenden Papierfasersuspension wieder zusammen zu bringen, um sie einer erneuten Flotation zu unterziehen. Bei geschlossenem Flotationsbehälter 1 wird ohnehin oft die Flotationsluft aus dem Behälter selbst abgesaugt und in einen Belüftungsinjektor geleitet. Beim erfindungsgemäßen Verfahren kann dazu ein Gemisch aus Luft bzw. Gas und der zurückgeflossenen Flüssigkeit genommen werden.

Die Erfindung und ihre Vorteile werden beschrieben anhand von Zeichnungen. Dabei zeigen:
- Fig. 1: eine Flotationsvorrichtung zur Durchführung des erfindungsgemäßen Verfahrens;
- Fig. 2: ein Detail der Fig. 1;
- Fig. 3: eine Variante des erfindungsgemäßen Verfahrens;
- Fig. 4: ein erläuterndes Vektordiagramm.

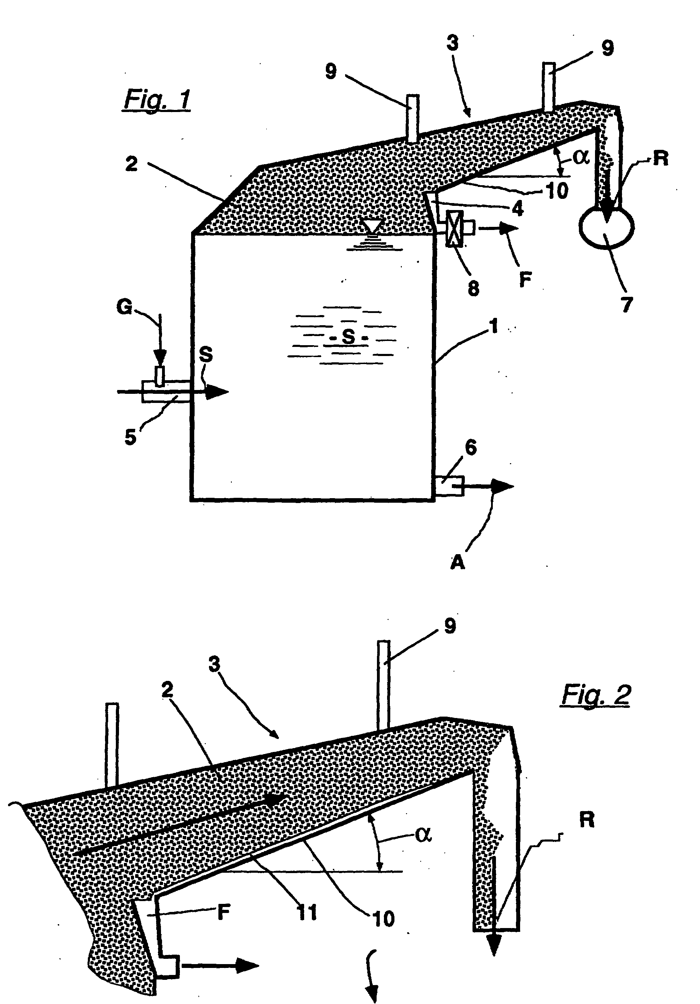

Fig. 1 zeigt grob schematisch eine Flotationsvorrichtung, die zur Durchführung des erfindungsgemäßen Verfahrens geeignet ist. Man erkennt einen Flotationsbehälter 1 , in dem sich die Papierfasersuspension S befindet. Diese wird vor Eintritt in den Flotationsbehälter 1 in einem Injektor 5 mit dem Gas G, insbesondere Luft, so vermischt, daß ein Suspensions-Luftblasengemisch entsteht, welches zur Flotation geeignet ist. Infolge der Flotationswirkung werden unerwünschte Bestandteile der Papierfasersuspension S nach oben ausflotiert und in einem Flotationsschaum 2 aufkonzentriert. Diese Vorgänge sind an sich bekannt. Die gereinigte Suspension tritt als Gutstoffsuspension A durch den Gutstoffauslauf 6 aus dem Flotationsbehälter 1 wieder aus. Das Verfahren wird mit Vorteil kontinuierlich geführt. Der Flotationsschaum 2 gelangt infolge einer anliegenden Druckdifferenz, welche z.B. durch Absaugen an der Schaumsaugleitung 7 erzeugt wird, in die Entwässerungsstrecke 3. In dieser wird der Flotationsschaum 2 in einem Steigwinkel a hier schräg nach oben geführt, so daß sich eine Steigstrecke bildet. Nach Durchlaufen der Steigstrecke fällt der Schaum herab in die Schaumsaugleitung 7 und bildet dort den Rejekt R. Die in der Steigstrecke auf der Wand 10 zurücklaufende Flüssigkeit F kann, wie hier dargestellt, über eine Tasche 4 separat abgeleitet werden, wozu zweckmäßigerweise mit Hilfe eines einstellbaren, eventuell regelbaren Ventiles 8 ein definierter Rückstau gebildet wird. Es kann passieren, daß sich an den Wänden der Entwässerungsstrecke 3 Ansammlungen von Flotationsschaum 2 bilden, die sich so weit verfestigen, daß sie zu Störungen führen könnten. Für solche Fälle sind Spülleitungen 9 vorgesehen, die die Verdickungen mit Hilfe von Wasser wieder auflösen. In weiterer Ausgestaltung können diese Spülleitungen 9 bewußt so ausgebildet und eingesetzt werden, daß sie zu einem Auswaschen des Flotationsschaumes 2, z.B. zur Rückgewinnung von unbeabsichtigt ausflotierten Fasern, benutzt werden. Es sind auch längs der Entwässerungsstrecke bewegbare Spülvorrichtungen, z.B. mit Sprühköpfen, verwendbar. Ähnliche Vorrichtungen sind aus der Kanalreinigung bekannt.

Fig. 2 zeigt den erfindungswesentlichen Vorgang des Verfahrens detaillierter. In dieser Darstellung ist die Flüssigkeitsunterschicht 11 erkennbar, welche sich an der die Entwässerungsstrecke 3 unten abschließenden Wandung 10 bildet. Auch diese Darstellung ist nur schematisch und soll die Funktionen des Verfahrens verdeutlichen. Die Wahl des Steigwinkels a hängt von den vorliegenden Bedingungen und Zielen des Verfahrens ab. In vielen Fällen wird er steiler sein als in den Figuren 1 und 2 dargestellt. Es ist auch denkbar, die Flotationsvorrichtung so auszuführen, daß sich der Steigwinkel α während des Betriebes verstellen läßt, um optimale Bedingungen für das Flotationsverfahren zu schaffen. Dabei kann durchaus der Stellmotor für den Steigwinkel in den Regelkreislauf eingebunden sein. Die Entwässerung kann mit einer senkrecht aufwärts gerichteten Schaumströmung beginnen, um dann in eine Waagerechte oder Schräge - sei sie nun aufwärts oder abwärts gerichtet - überzugehen. Es kann auch von Vorteil sein, den Flotationsschaum mit in Strömungsrichtung zunehmendem Steigwinkel zu entwässern. Eine weitere Verbesserung kann darin liegen, daß der Strömungsquerschnitt der Entwässerungsstrecke 3, wie hier gezeichnet, sich in Strömungsrichtung verjüngt. Dadurch wird der Abnahme des Schaumvolumens Rechnung getragen, also eine zu starke Abnahme der Strömungsgeschwindigkeit verhindert.

Wird am Ende der Entwässerungsstrecke 3 eine Blende angebracht (hier nicht gezeichnet), so ist bei entsprechendem Druckgefälle eine weitere Reduzierung des Schaumvolumens möglich.

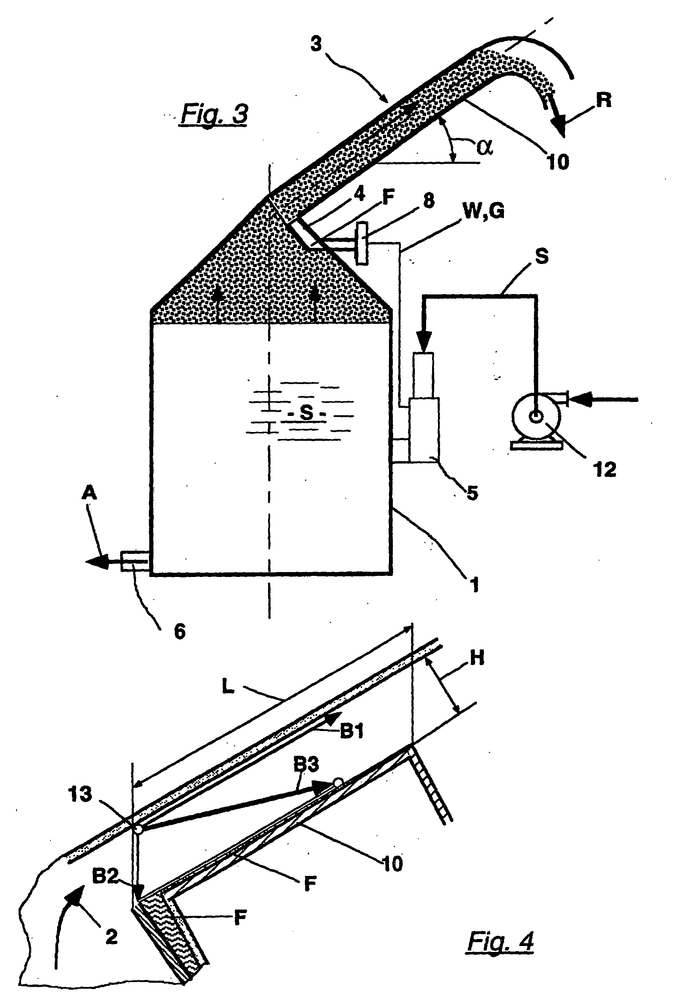

In Fig. 3 ist eine Variante des erfindungsgemäßen Verfahrens dargestellt, bei der der Flotationsbehälter 1 etwas anders geformt ist und der Steigwinkel a steiler gewählt wurde. Auch hier wird die in der Steigstrecke herablaufende Flüssigkeit F in einer Tasche 4 aufgefangen, so daß sie nicht in den Schaum oder in die Suspension zurückgelangen kann. Das hier dargestellte Verfahren wird mit einem leichten Überdruck betrieben, z.B. erzeugt durch eine Stoffpumpe 12, der so bemessen ist, daß der Flotationsschaum 2 über die Steigstrecke transportiert werden kann. Zur Belüftung wird wiederum ein Injektor 5 verwendet, der das zur Blasenbildung benötigte Gas G aus dem Flotationsbehälter 1 absaugt. Dabei ist die Strömungsführung so gewählt, daß das Gas G zusammen mit der zurückgelaufenen Flüssigkeit F in den Injektor 5 gelangt. Störstoffbestandteile, die sich in der Flüssigkeit F befinden, können dadurch mit Luftblasen in Kontakt gebracht werden und erneut an der Flotation teilnehmen.

Fig. 4 zeigt schematisch die Bewegungsabläufe in einer die Entwässerungsstrecke bildenden Steigstrecke beim Absinken der Flüssigkeit durch den Flotationsschaum hindurch. Wichtig für den gewünschten Effekt des Verfahrens ist die Möglichkeit, der im Flotationsschaum 2 enthaltenen beweglichen Wasserteilchen 13 aus dem Flotationsschaum zu entfernen, bevor dieser als Rejekt R abgeführt wird. Dazu steht in der Entwässerungsstrecke die Länge L zur Verfügung. Theoretisch ist bei einem Wasserteilchen 13, das sich am oberen Rand des die Entwässerungsstrecke bildenden Kanals befindet, die Wahrscheinlichkeit, an den unteren Rand des Kanals zu sedimentieren, am geringsten. Infolge der Sedimentationsgeschwindigkeit legt das Wasserteilchen 13 in einer bestimmten Sedimentationszeit den Weg B2 zurück, der es in den Bereich unterhalb des Flotationsschaumes transportiert. Die Sedimentationszeit hängt von der Höhe H des Kanals, dem Steigwinkel a und den Verhältnissen im Flotationsschaum ab. Im selben Zeitraum legt der Flotationsschaum aufgrund seiner Transportgeschwindigkeit in der Entwässerungsstrecke 3 den Weg B1 zurück. Daraus ergibt sich ein resultierender Weg B3 für das Wasserteilchen, absolut betrachtet. Ist die Bedingung erfüllt, daß die Länge L mindestens so lang ist wie der Weg B1, den der Schaum in der maximalen Sedimentationszeit des Wasserteilchens zurücklegt, so kann der gewünschte Effekt eintreten.

## Patentansprüche

1. Verfahren zur Entfernung von Feststoffen aus einer wässrigen Papierfasersuspension (S), bei dem Feststoffe mit Hilfe von Gasblasen (G) aus der Papierfasersuspension (S) herausgeführt, in einem Flotationsschaum (2) gesammelt und als Rejekt (R) abgeführt werden, wodurch die Papierfasersuspension (S) gereinigt und eine Gutstoffsuspension (A) gebildet wird,
**dadurch gekennzeichnet,**
**daß** der Flotationsschaum (2) von der Papierfasersuspension (S) in einer Entwässerungsstrecke (3) seitlich weggeführt wird und daß ein Teil der darin enthaltenen Flüssigkeit (F) in der Entwässerungsstrecke (3) gesammelt und abgeführt wird.

2. Verfahren nach Anspruch 1,
**dadurch gekennzeichnet,**
**daß** die Flüssigkeit (F) an einer die Entwässerungsstrecke (3) unten abschließenden Wandung (10) gesammelt wird.

3. Verfahren nach Anspruch 1, 2 oder 3,
**dadurch gekennzeichnet,**
**daß** die Flussrichtung in der Entwässerungsstrecke (3) einen Steigwinkel (α) gegen die Horizontale zwischen 0° und 80° aufweist.

4. Verfahren nach Anspruch 3,
**dadurch gekennzeichnet,**
**daß** der Steigwinkel (α) zwischen 30° und 60° liegt.

5. Verfahren nach Anspruch 1, 2, 3 oder 4,
**dadurch gekennzeichnet,**
**daß** der Steigwinkel (α) einstellbar ist.

6. Verfahren nach einem der voranstehenden Ansprüche,
**dadurch gekennzeichnet,**
**daß** die Flüssigkeit (F) ohne spezielle Reinigung in die Papierfasersuspension (S) zurückgeführt wird.

7. Verfahren nach Anspruch 6,
**dadurch gekennzeichnet,**
**daß** die Flüssigkeit (F) zusammen mit der Papierfasersuspension erneut mit Gasblasen (G) versetzt und flotiert wird.

8. Verfahren nach Anspruch 7,
**dadurch gekennzeichnet,**
**daß** ein Injektor (5) zur Belüftung der Papierfasersuspension (S) verwendet wird, der aus dem Flotationsschaum (2) das frei werdende Gas und die aus der Entwässerungsstrecke (3) abfließende Flüssigkeit (F) ansaugt.

9. Verfahren nach Anspruch 1, 2, 3, 4 oder 5,
**dadurch gekennzeichnet,**
**daß** die Flüssigkeit (F) einer Wasserklärung unterzogen wird.

10. Verfahren nach einem der voranstehenden Ansprüche,
**dadurch gekennzeichnet,**
**daß** der Strömungsquerschnitt in der Entwässerungsstrecke (3) rund oder oval ist.

11. Verfahren nach einem der voranstehenden Ansprüche,
**dadurch gekennzeichnet,**
**daß** der Strömungsquerschnitt in der Entwässerungsstrecke (3) in Strömungsrichtung des Flotationsschaumes (2) kleiner wird.

12. Verfahren nach einem der voranstehenden Ansprüche,
**dadurch gekennzeichnet,**
**daß** die Länge (L) der Entwässerungsstrecke (3) mindestens dem Weg entspricht, den der Flotationsschaum (2) in der Entwässerungsstrecke während der maximalen Sedimentationszeit der aus dem Flotationsschaum (2) abzuscheidenden Flüssigkeit (F) zurücklegt.

13. Verfahren nach einem der voranstehenden Ansprüche,
**dadurch gekennzeichnet,**
**daß** am Ende der Entwässerungsstrecke (3) ein Druckabfall mit Hilfe einer Drosselstelle erzeugt wird.

14. Verfahren nach Anspruch 13,
**dadurch gekennzeichnet,**
**daß** der Druckabfall an der Drosselstelle einstellbar ist.

15. Verfahren nach einem der voranstehenden Ansprüche,
**dadurch gekennzeichnet,**
**daß** der Steigwinkel (α) in der Entwässerungsstrecke (3) stetig oder unstetig abnimmt.

16. Verfahren nach einem der Ansprüche 1 bis 15,
**dadurch gekennzeichnet,**
**daß** der Steigwinkel (α) in der Entwässerungsstrecke (3) stetig oder unstetig zunimmt.

## Claims

1. Process for removing solids from an aqueous pulp suspension (S), in which solids are drawn out of the pulp suspension (S) by means of gas bubbles (G), are collected in a flotation froth (2), and are discharged as reject (R), whereby the pulp suspension (S) is cleaned and a desired suspension (A) is formed, **characterised in that** the flotation froth (2) is guided laterally away from the pulp suspension (S) in a de-watering section (3), and **in that** some of the liquid (F) contained therein is collected in the de-watering section (3) and is discharged.

2. Process according to claim 1, **characterised in that** the liquid (F) is collected at a wall (10) sealing the bottom of the de-watering section (3).

3. Process according to claim 1, 2 or 3, **characterised in that** the flow direction in the de-watering section (3) has a gradient (α) relative to the horizontal of between 0° and 80°.

4. Process according to claim 3, **characterised in that** the gradient (α) is between 30° and 60°.

5. Process according t claim 1, 2, 3 or 4, **characterised in that** the gradient (α) is adjustable.

6. Process according to one of the preceding claims, **characterised in that** the liquid (F) is fed back into the pulp suspension (S) without special cleaning.

7. Process according to claim 6, **characterised in that** the liquid (F) together with the pulp suspension is again subjected to gas bubbles (G) and is frothed.

8. Process according to claim 7, **characterised in that** an injector (5) for aerating the pulp suspension (S) is used, which sucks out the gas being released from the flotation froth (2) and the liquid (F) flowing out of the de-watering section (3).

9. Process according to claim 1, 2, 3, 4 or 5, **characterised in that** the liquid (F) is subjected to water clarification.

10. Process according to one of the preceding claims, **characterised in that** the flow cross-section in the de-watering section (3) is round or oval.

11. Process according to one of the preceding claims, **characterised in that** the flow cross-section in the de-watering section (3) decreases in the direction of flow of the flotation froth (2).

12. Process according to one of the preceding claims, **characterised in that** the length (L) of the de-watering section (3) is at least the same as the distance covered by the flotation froth (2) in the de-watering section during maximum sedimentation time of the liquid (F) to be separated from the flotation froth (2).

13. Process according to one of the preceding claims, **characterised in that** at the end of the de-watering section (3), the pressure is reduced by means of a choke.

14. Process according to claim 13, **characterised in that** the drop in pressure at the choke point is adjustable.

15. Process according to one of the preceding claims, **characterised in that** the gradient (α) in the de-watering section (3) decreases continuously or discontinuously.

16. Process according to one of claims 1 to 15, **characterised in that** the gradient (α) in the de-watering section (3) increases continuously or discontinuously.

## Revendications

1. Procédé destiné à l'élimination de matières solides d'une suspension aqueuse de fibres de papier (S), dans lequel les matières solides sont éliminées de la suspension de fibres de papier (S) à l'aide de bulles de gaz (G), collectées dans une mousse de flottation (2) et évacuées en tant que rejet (R), moyen par lequel la suspension de fibres de papier (S) est épurée, et une suspension de pâte à papier acceptée (A) est engendrée,
**caractérisé en ce que**
la mousse de flottation (2) de la suspension de fibres de papier (S) est évacuée latéralement dans, une voia d'assèchement (3), et **en ce qu'**une partie du liquide (F) qui y est contenu est collectée dans la voie d'assèchement (3), et évacuée.

2. Procédé selon la revendication 1,
**caractérisé en ce que**
le liquide (F) est collecté sur une paroi (10) fermant la voie d'assèchement (3) en partie inférieure.

3. Procédé selon la revendication 1, 2 ou 3,
**caractérisé en ce que**
le sens du courant dans la voie d'assèchement (3) comporte un angle ascendant (α) par rapport à l'horizontale, qui est compris entre 0° et 80°.

4. Procédé selon la revendication 3,
**caractérisé en ce que**
l'angle ascendant (α) est situé entre 30° et 60°.

5. Procédé selon la revendication 1, 2, 3 ou 4
**caractérisé en ce que**
l'angle ascendant (α) est réglable.

6. Procédé selon l'une quelconque des revendications précédentes,
**caractérisé en ce que**
le liquide (F) est recyclé dans la suspension de fibres de papier (S) sans épuration spécifique.

7. Procédé selon la revendication 6,
**caractérisé en ce que**
le liquide (F) ensemble avec la suspension de fibres de papier est à nouveau mélangé aux bulles de gaz (G) , et flotté.

8. Procédé selon la revendication 7,
**caractérisé en ce que**
un injecteur (5) est utilisé pour l'aération de la suspension de fibres de papier (5), lequel aspire le gaz se libérant de la mousse de flottation (2) et le liquide (F) s'écoulant de la voie d'assèchement (3).

9. Procédé selon la revendication 1, 2, 3, 4 ou 5,
**caractérisé en ce que**
le liquide (F) est soumis à une épuration d'eau.

10. Procédé selon l'une quelconque des revendications précédentes,
**caractérisé en ce que**
la section transversale d'écoulement de la voie d'assèchement (3) est circulaire ou ovale.

11. Procédé selon l'une quelconque des revendications précédentes,
**caractérisé en ce que**
la section transversale d'écoulement de la voie d'assèchement (3) se rétrécit dans le sens de l'écoulement de la mousse de flottation (2).

12. Procédé selon l'une quelconque des revendications précédentes,
**caractérisé en ce que**
la longueur (L) de la voie d'assèchement (3) correspond au moins au trajet que la mousse de flottation (2) parcourt dans la voie d'assèchement pendant le temps de sédimentation maximal du liquide (F) à séparer de la mousse de flottation (2).

13. Procédé selon l'une quelconque des revendications précédentes,
**caractérisé en ce que**
une perte de charge est engendrée à la fin de la voie d'assèchement (3) à l'aide d'un point d'étranglement.

14. Procédé selon la revendication 13,
**caractérisé en ce que**
la perte de charge est réglable au niveau du point d'étranglement.

15. Procédé selon l'une quelconque des revendications précédentes,
**caractérisé en ce que**
l'angle ascendant (α) dans la voie d'assèchement (3) diminue en continu ou en discontinu.

16. Procédé selon l'une quelconque des revendications 1 à 15,
**caractérisé en ce que**
l'angle ascendant (α) dans la voie d'assèchement (3) augmente en continu ou en discontinu.
